# EUROPEAN PATENT APPLICATION

(11) **EP 4 610 026 A1**
(43) Date of publication of application: **03.09.2025**
(21) Application number: 22963500.8
(22) Date of filing: 27.10.2022
(51) Int. Cl.: B29C 64/129

(54) **METHOD FOR PRODUCING SHAPED ARTICLE BY 3D PRINTER, AND 3D PRINTER CONTROL PROGRAM**

(71) Applicant: Hotty Polymer Co., Ltd., Tokyo 131-0032 (JP)
(72) Inventor: HOTTA, Hidetoshi, Tokyo 131-0032 (JP); TANABE, Fumio, Tokyo 131-0032 (JP)
(74) Representative: Berggren Oy
(86) International application number: PCT/JP2022/040236
(87) International publication number: WO 2024/089853

(57) **Abstract**

It is the subject of the present invention to provide a manufacturing method of a molded object using a three-dimensional printer for creating a molded object with favorable transparency and a control program for a three-dimensional printer. For solving the subject, the manufacturing method of a molded object using a three-dimensional printer manufactures a molded object by sequentially repeating an uncured layer forming process (S1) of forming one layer of a molded layer with an uncured molding material and an uncured layer curing process (S2) of curing the one layer of the molded layer, wherein the uncured layer curing process (S2) is finished prior to the final curing of the one layer of the molded layer formed by the immediately preceding uncured layer forming process (S1) and the uncured layer forming process (S1) for forming the next one layer of the molded layer is executed.

## Description

### [Technical Field]

The present invention belongs to the technical field of three-dimensional printers for manufacturing a molded object by curing while laminating molding materials.

### [Background Art]

In a three-dimensional printer of MEX method (Material Extrusion Deposition Method, including food printers or the like), FDM method (Fused Deposition Modeling Method) or LAM method (Liquid Additive Manufacturing Method) , resin such as PLA, ABS, PC, and TPE is used as a moldable material, and the printer is configured to create a desired molded object by gradually forming laminations from a lower layer to a top layer by extruding and discharging liquid resin from a nozzle onto a stage and suitably controlling operations of the nozzle in three dimensional directions.

However, in the case of a molded object using a resin material or the like by means of such an MEX method, outer end portions of layers that are formed during laminating processes remained as outwardly bulging shapes, and minute protruding lines that continue in vertical directions and formed in width directions continued on outer surfaces of a formed molded object.

As a result, there was a drawback that the minute protruding lines that continue in vertical directions and formed in width directions on the outer surface of a molded object formed so-called "build lines" so that the build lines resulted in a lower transparency also when a transparent molded object was to be formed, thus marring the appearance of the molded object.

### [Citation List]

### [Patent Literature]

[PTL 1]
Laid-Open Patent Publication No. 2017-226140

### [Summary of the Invention]

### [Technical Problem]

Therefore, it is the subject of the present invention to provide a manufacturing method of a molded object having a favorable transparency using a three-dimensional printer and a control program for a three-dimensional printer.

### [Solution to Problem]

The manufacturing method according to Claim 1 is a manufacturing method of a molded object using a three-dimensional printer that sequentially repeats, in a laminating direction, an uncured layer forming process of discharging and laminating uncured molding material from a nozzle to form one layer of a molded layer with the uncured molding material, and an uncured layer curing process of curing the one layer of the molded layer, wherein, the manufacturing method of a molded object using a three-dimensional printer finishes the uncured layer curing process prior to the curing of the one layer of the molded layer formed by the immediately preceding uncured layer forming process, executes the uncured layer forming process of forming the next one layer of the molded layer, and adheres and cures the one layer of the molded layer in a viscous state with the next one layer of the molded layer in a viscous state to form a molded object.

According to the manufacturing method according to Claim 1, since the fact that the molding material requires a predetermined time to finally cure is utilized and an upper and a lower molded layer that contact each other, that is to say, both of a formed molded layer and a molded layer to be formed next, are adhered, including outer edge portions, prior to curing of the formed molded layer with the viscous molded layer to be formed next, it is possible to reduce gap portions, as much as possible, that are typically formed between adjoining molded layers at end surface portions of the molded object since the next molded layer is formed by discharging the molding material from the nozzle after curing of the molded layer, wherein the gap portions are causes of so-called "build lines".

As a result, it is possible to avoid formation of "build lines" that were conventionally formed by gaps generated between outer edge portions of respective molded layers adjoining in vertical directions, and it is consequently possible to mold a molded object of high transparency with smoother end surface portions of the molded object. Moreover, since end edge portions of upper and lower molded layers adhere with each other, also in the case a molded object is formed with overhanging portions or undercut portions, there is no need to provide support members at these portions so that it is possible to avoid complications during manufacturing processes and to improve producibility.

The manufacturing method according to Claim 2 is a manufacturing method of a molded object using a three-dimensional printer wherin, in the manufacturing method of a molded object using a three-dimensional printer according to Claim 1, the uncured layer forming process is a process of forming one layer of the molded layer with the uncured molding material by discharging the uncured molding material from the nozzle while moving the nozzle as if to draw a concentric circle from inside of a region of forming one layer of the molded layer towards an outer edge portion, and the uncured layer curing process is executed in a state an outer edge portion of the one layer of the molded layer formed in the immediately preceding uncured layer forming process and an outer edge portion of one layer of the molded layer formed in the next uncured layer forming process are adhering with each other.

According to this manufacturing method, particularly in the case of creating a molded object of a shape that has a planar part or disk-like part that projects outward in a planar direction, the outer edge portions of the upper and lower molded layers will be adhered with each other in a state gaps are reduced so that it is possible to perform molding without requiring support members.

That is to say, while a nozzle of a three-dimensional printer for discharging a molding material is controlled to move from an inside portion to an outside portion when creating a molded object of a shape having a planar part or a disk-like part, wherein the planar part or the disk-like part project outward in the planar direction, when a molded layer is formed by discharging a molding material corresponding to the next overlying molded layer from the nozzle after an end edge portion of a molded layer has completely cured as it was conventionally the case, the lower molded layer is solidified to have a low viscosity and to exhibit low adhesiveness at an overhanging portion of the upper molded layer so that the mold might break, and support members were required in order to prevent this.

However, in the present invention, since the outer edge portion of the molded layer formed in the immediately preceding uncured layer forming process, which is in a state prior to completely curing and exhibiting adhesiveness, and the outer edge portion of the overlying molded layer formed in the next uncured layer forming process adhere with other, the adhesiveness is high, and the mold will not break even though no support members are formed at overhanging portions or undercut portions.

As a result, especially when creating a molded object of a shape having a planar part or a disk-like part, wherein the planar part or the disk-like part project outward in the planar direction, there is no need to provide support members at end edge portions so that it is possible to avoid complications during manufacturing processes and to improve producibility.

At the same time, it is possible to avoid formation of "build lines" that are formed by gaps generated between outer edge portions of respective molded layers adjoining in vertical directions, and it is consequently possible to obtain a molded object of high transparency with smoother end surface portions of the molded object.

The invention according to Claim 3 is a manufacturing method of a molded object using a three-dimensional printer, wherein, in the manufacturing method according to Claim 1 or 2, the uncured molding material is an ultraviolet curing liquid silicone rubber, and the uncured layer curing process is a process of irradiating ultraviolet light onto the ultraviolet curing liquid silicone rubber which is the uncured molding material while controlling time variations in the viscosity of the ultraviolet curing liquid silicone rubber, intensity and irradiation time of ultraviolet light, discharge pressure of the molding material from the nozzle, timing of forming the next molding layer, or movement locus of the nozzle.

According to the manufacturing method of the present invention, by controlling the movement locus of the nozzle or the intensity of ultraviolet light or the like, the viscosity of the ultraviolet curing liquid silicone rubber used as the molding material can be adjusted to suitably control the viscosity of the molded layer and to adhere the end edge portion of the molded layer with the end edge portion of the overlying molded layer while reducing gaps therebetween so that so-called "build lines" on the surface of a molded object can be reduced to minimum, and it is possible to create a molded object of high transparency and requiring no support members.

The manufacturing method according to Claim 4 is a manufacturing method of a molded object using a three-dimensional printer, wherein, in the manufacturing method according to Claim 1 or 2, the uncured molding material is a thermosetting liquid silicone rubber, and the uncured layer curing process is a process of heating the thermosetting liquid silicone rubber which is the uncured molding material while controlling time variations in the viscosity of the thermosetting liquid silicone rubber, heating time, discharge pressure of the molding material from the nozzle, timing of forming the next molding layer, or movement locus of the nozzle.

Therefore, according to the present invention, by controlling the movement locus of the nozzle, the heating temperature or the like, the viscosity of the thermosetting curing liquid silicone rubber used as the molding material is adjusted to suitably control the viscosity of the molded layer and to adhere the end edge portion of the molded layer with the end edge portion of the overlying molded layer while reducing gaps therebetween so that so-called "build lines" on the surface of a molded object can be reduced to minimum, and it is possible to create a molded object of high transparency and requiring no support members.

The manufacturing method according to Claim 5 is a manufacturing method of a molded object using a three-dimensional printer, wherein, in the manufacturing method of a molded object using a three-dimensional printer according to Claim 4, the thermosetting liquid silicone rubber is an RTV (Room Temperature Vulcanizing) silicone rubber.

Since the RTV silicone rubber is a molding material that cures at room temperature, controlling the movement locus of the nozzle, the molding time, or the discharge pressure from the nozzle or the like during molding operations is even more crucial when compared to molding materials of ultraviolet curing type, but by suitably controlling these conditions, the viscosity of RTV silicone rubber is adjusted to suitably control the viscosity of the molded layer and to adhere the end edge portion of the molded layer with the end edge portion of the overlying molded layer while reducing gaps therebetween so that "build lines" on the surface of a molded object can be reduced to minimum, and it is possible to create a molded object of high transparency and requiring no support members.

The manufacturing method according to Claim 6 is a manufacturing method of a molded object using a three-dimensional printer, wherein, in the manufacturing method of a molded object using a three-dimensional printer according to Claim 1 or 2, the uncured molding material is a thermoplastic resin, and the uncured layer curing process is a process of heating the thermoplastic resin which is the uncured molding material while controlling time variations in the viscosity of the thermoplastic resin, heating time, discharge pressure of the molding material from the nozzle, timing of forming the next molding layer, or movement locus of the nozzle.

Therefore, by suitably controlling conditions such as the movement locus of the nozzle, the curing temperature or curing time of the thermoplastic resin, the viscosity of the thermosetting liquid resin used as the molding material can be adjusted to suitably control the viscosity of the molded layer and to adhere the end edge portion of the molded layer with the end edge portion of the overlying molded layer while reducing gaps therebetween so that so-called "build lines" on the surface of a molded object can be reduced to minimum, and it is possible to create a molded object of high transparency and requiring no support members.

The manufacturing method according to Claim 7 is a manufacturing method of a molded object using a three-dimensional printer according to Claim 1 or 2, wherein, the three-dimensional printer is a three-dimensional printer of MEX method (Material Extrusion Deposition Method).

The manufacturing method according to Claim 8 is a manufacturing method of a molded object using a three-dimensional printer according to Claim 1 or 2, wherein, the three-dimensional printer is a three-dimensional printer of LAM method (Liquid Additive Manufacturing Method).

The invention according to Claim 9 is a program for executing operations of a control device of a three-dimensional printer for manufacturing a molded object by sequentially repeating an uncured layer forming process of discharging and laminating uncured molding material from a nozzle to form one layer of a molded layer with the uncured molding material, and an uncured layer curing process of curing the one layer of the molded layer, wherein the control program for a three-dimensional printer,wherein, it controls the three-dimensional printer to finish the uncured layer curing process prior to the final curing of the one layer of the molded layer formed by the immediately preceding uncured layer forming process, and to execute the uncured layer forming process of forming the next one layer of the molded layer.

The control program for a three-dimensional printer according to Claim 10, wherein, in the control program for a three-dimensional printer according to Claim 9, the program is executed by a control device of a three-dimensional printer for manufacturing a molded object by sequentially repeating an uncured layer forming process of forming one layer of a molded layer with an uncured molding material, and an uncured layer curing process of curing the one layer of the molded layer, wherein the control program for a three-dimensional printer controls the three-dimensional printer to finish the uncured layer curing process prior to the final curing of the one layer of the molded layer formed by the immediately preceding uncured layer forming process, and to execute the uncured layer forming process of forming the next one layer of the molded layer.

According to the control program for a three-dimensional printer according to Claim 10, by mounting it to a control device (computer) of a three-dimensional printer and executing it, the three-dimensional printer that manufactures a molded object by sequentially repeating an uncured layer forming process of forming one layer of a molded layer with an uncured molding material, and an uncured layer curing process of curing the one layer of the molded layer is controlled, and by utilizing the fact that the molding material requires a predetermined time to finally cure, it is possible to adhere the mutually contacting upper and lower molded layers with each other to mold a molded object of high transparency without requiring support members.

The control program for a three-dimensional printer according to Claim 11, wherein, the control program for a three-dimensional printer according to Claim 9, the uncured molding material is an ultraviolet curing liquid silicone rubber, and the uncured layer curing process is a process of irradiating ultraviolet light onto the ultraviolet curing liquid silicone rubber which is the uncured molding material based on parameters including time variations in the viscosity of the ultraviolet curing liquid silicone rubber, intensity and irradiation time of ultraviolet light, discharge pressure of the molding material from the nozzle, or timing of forming the next molding layer, and movement locus of the nozzle.

The control program for a three-dimensional printer according to Claim 12,wherein, in the control program for a three-dimensional printer according to Claim 9, the uncured molding material is a thermoplastic resin, and the uncured layer curing process is a process of heating the thermoplastic resin which is the uncured molding material based on parameters including time variations in the viscosity of the thermoplastic resin, heating time, discharge pressure of the molding material from the nozzle, or timing of forming the next molding layer, or movement locus of the nozzle.

The control program for a three-dimensional printer according to Claim 13, wherein, it includes a step of acquiring learning data including molding condition data related to time variations in the viscosity of the discharged various uncured molding materials, discharge pressure from the nozzle, heating time, intensity and irradiation time of ultraviolet light, curing speed, execution time of the uncured layer curing process, timing of forming the next molding layer, conditions of embodiment, or movement locus of the nozzle as well as molding result data related to the quality of transparency of the molded object or build lines when performing molding based on the molding condition data, a step of generating a learned model with optimized molding conditions by means of machine learning using the obtained learning data, and a step of controlling the three-dimensional printer based on the learned model.

### [Advantageous Effects of the Invention]

According to the manufacturing method according to Claims 1 to 8, since the fact that the molding material requires a predetermined time to finally cure is utilized to adhere an upper and lower molded layers that are in contact with each other, that is to say, both end edge portions of the formed molded layer and the molded layer to be formed next, with the molded layer to be formed next prior to curing of the formed molded layer, it is possible to reduce, as much as possible, gap portions that are typically formed between adjoining molded layers at end surface portions of the molded object since the next molded layer is formed by discharging the molding material from the nozzle after curing of the molded layer, wherein the gap portions are causes of so-called "build lines."

As a result, it is possible to avoid formation of "build lines" that were conventionally formed by gaps generated between respective molded layers adjoining in vertical directions, and it is consequently possible to mold a molded object of high transparency with smoother end surface portions.

Moreover, since end edge portions of upper and lower molded layers adhere with each other, also in the case a molded object is formed with overhanging portions or undercut portions, there is no need to provide support members at these portions so that it is possible to avoid complications during manufacturing processes and to improve producibility.

Further, in order to manufacture a molded object of high transparency by reducing "build lines" as described above, a molded object of a complicated shape without using support members, or a molded object of a complicated shape having overhanging or undercut portions, condition settings such as information related to time variations in the viscosity of the molding material discharged from the nozzle, time for applying ultraviolet irradiation or thermal energy for curing the molding material, and timing of forming the next molding layer, and optimized movement locus of the discharge nozzle (referred to as "molding path") will be extremely crucial.

Therefore, while there is a need for slice software capable of controlling driving of a three-dimensional printer to clear the above conditions for solving the above subject, conventional slice software does not take molding conditions related to time variations in the viscosity of the discharged various uncured molding materials, discharge pressure from the nozzle, heating time, intensity and irradiation time of ultraviolet light, curing speed, execution time of the uncured layer curing process, timing of forming the next molding layer, conditions of embodiment, or movement locus of the nozzle into account.

As a result, the subject of the present invention was not sold conventionally, and it can be solved only by the control program for a three-dimensional printer according to Claims 9 to 13 of the present invention.

Particularly, the control program for a three-dimensional printer according to Claim 13 of the invention is configured to acquire and store, by performing molding operations of molded objects, learning data including data related to molding conditions such as time variations in the viscosity of the discharged various uncured molding materials, discharge pressure from the nozzle, heating time, intensity and irradiation time of ultraviolet light, curing speed, execution time of the uncured layer curing process, timing of forming the next molding layer, conditions of embodiment, or movement locus of the nozzle and, consequently, molding results related to the quality of transparency of the molded object or build lines, and to perform machine learning by means of AI (Artificial Intelligence) in order to form a learned model with optimized molding conditions and to perform control operations of the three-dimensional printer based on the learned model, it is possible to effectively manufacture a desired molded object with optimal molding conditions.

### [Brief Description of Drawings]

[Fig. 1]

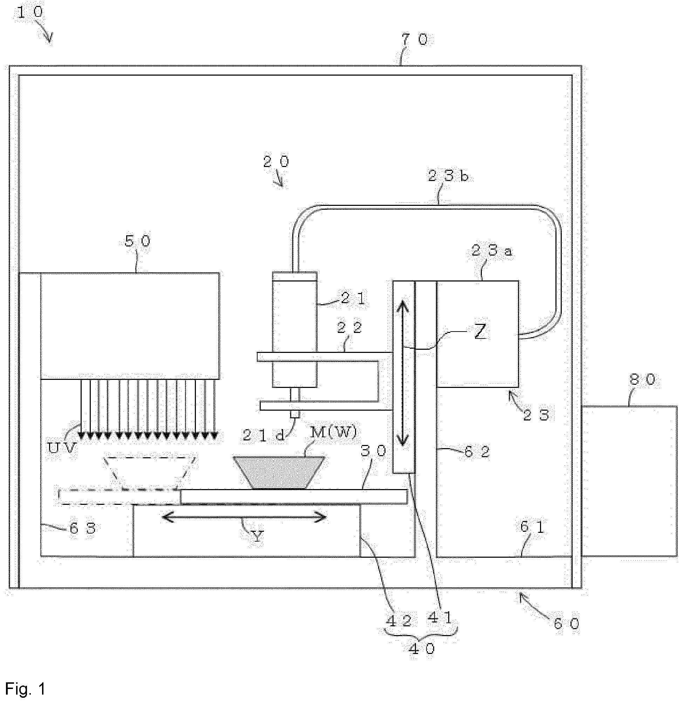

   Fig. 1 is a conceptual view of a three-dimensional printer for manufacturing a molded object using a manufacturing method according to one embodiment of the present invention.
[Fig. 2]

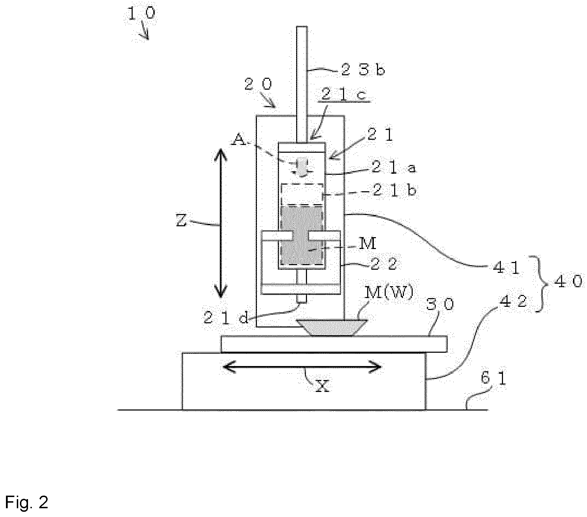

   Fig. 2 is a conceptual view of a dispenser portion and a moving mechanism of the three-dimensional printer shown in Fig. 1.
[Fig. 3]

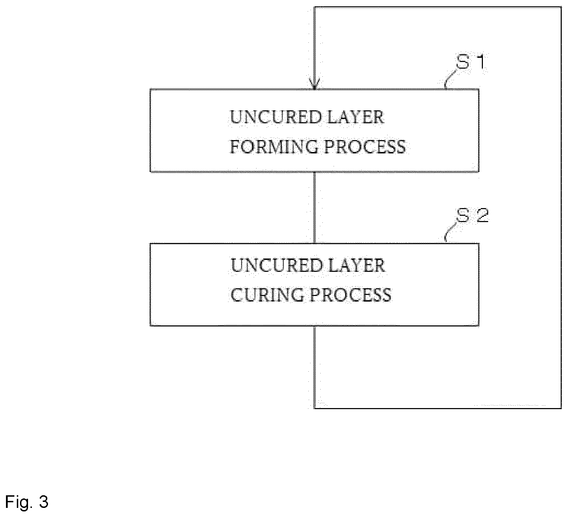

   Fig. 3 is a flowchart of a manufacturing method according to one embodiment of the present invention.
[Fig. 4]

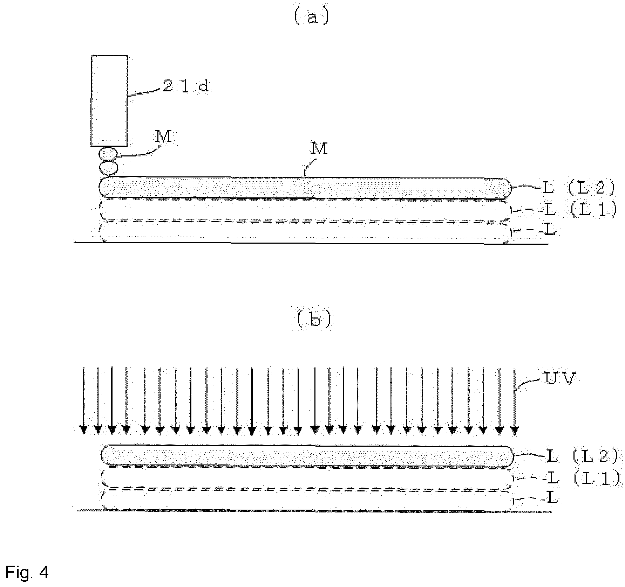

   Fig. 4 shows one embodiment of a manufacturing method according to the present invention of an example, the molding material is an ultraviolet curing liquid silicone rubber, wherein (a) is an explanatory view of an uncured layer forming process. (b) is an explanatory view of an uncured layer curing process.
[Fig. 5]

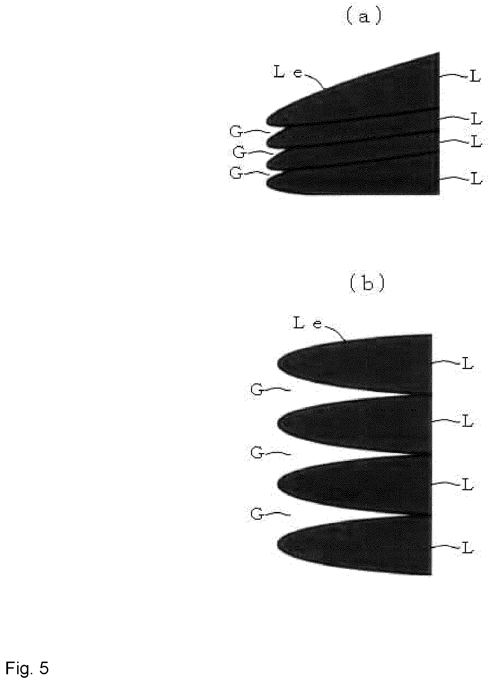

   Fig. 5 shows one embodiment of a manufacturing method according to the present invention, wherein (a) is a conceptual view corresponding to a cross-sectional view showing a state of an outer edge portion of a molded layer formed by a manufacturing method according to one embodiment. (b) is a conceptual view corresponding to a cross-sectional view showing a state of an outer edge portion of a molded layer formed by a conventional manufacturing method.
[Fig. 6]

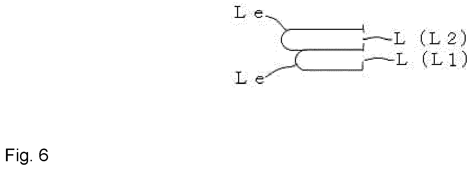

   Fig. 6 shows one embodiment of a manufacturing method according to the present invention, and is a conceptual view corresponding to a cross-sectional view showing a state of an outer edge portion of a molded layer formed by a manufacturing method according to one embodiment.

### [Description of Embodiments]

Hereinafter, embodiments of the present invention will be explained while referring to the drawings. Here, a three-dimensional printer for manufacturing a molded object by means of the liquid additive manufacturing method using an ultraviolet curing material (for instance, ultraviolet curing liquid silicone rubber) as a molding material will be explained.

### [Configuration of a Three-dimensional Printer]

### [Three-dimensional Printer]

A three-dimensional printer 10 used in the manufacturing method of a molded object according to the present embodiment is of LAM method, and comprises, as shown in Fig. 1 and Fig. 2, a printer body 60, a casing 70 covering the printer body 60 to shield ultraviolet light, and a control device 80.

The printer body 60 is comprised of a dispenser portion 20 for injecting an ultraviolet curing material M, a stage portion 30 onto which the ultraviolet curing material M injected from the dispenser portion 20 is laminated, a moving mechanism portion 40 for moving the dispenser portion 20 and the stage portion 30 relative to each other, and an ultraviolet irradiating portion 50 for irradiating ultraviolet light UV onto the ultraviolet curing material M injected on the stage portion 30.

The printer body 60 further has a base portion 61 comprising a bottom portion of the three-dimensional printer 10, and two support portions 62, 63 extending upward from the base portion 61. The dispenser portion 20 is supported by one support portion 62, and the ultraviolet irradiating portion 50 is supported by the other support portion 63. The stage portion 30 is provided on the base portion 61.

The dispenser portion 20 has a material cartridge 21 accommodating the ultraviolet curing material M, a cartridge holding portion 22 holding the material cartridge 21 in an exchangeable manner, and a compressed air supplying portion (material injecting means) 23 for injecting the ultraviolet curing material M from the material cartridge 21 held by (attached to) the cartridge holding portion 22.

The cartridge holding portion 22 is supported by the supporting portion 62 via a lifting mechanism 41. The lifting mechanism 41 moves the cartridge holding portion 22 in vertical directions (directions indicated by arrow Z).

The compressed air supplying portion 23 is fixed to the supporting portion 62. The compressed air supplying portion 23 has a compressed air discharging mechanism 23a for discharging compressed air, and a compressed air supplying pipe 23b for supplying compressed air discharged from the compressed air discharging mechanism 23a to the material cartridge 21 attached to the cartridge holding portion 22.

As shown in Fig. 2, the material cartridge 21 has a syringe-like material container portion 21a and a piston portion 21b inserted into the material container portion 21a.

A compressed air inlet 21c to which compressed air supplying pipe 23b is connected is provided at a base end (upper end) of the material container portion 21a. The material cartridge 21 discharges the ultraviolet curing material M from a nozzle 21d provided at a tip end (lower end) of the material container portion 21a when the piston portion 21b is pressed by compressed air A supplied from the compressed air discharging mechanism 23a through the compressed air supplying pipe 23b. The material container portion 21a and the piston portion 21b are formed of an ultraviolet-shielding synthetic resin material.

As shown in Fig. 1 and Fig. 2, the stage portion 30 is supported at the base portion 61 via a horizontal moving mechanism 42. The horizonal moving mechanism 42 moves the stage portion 30 in lateral directions (directions shown by arrow X) and front-back directions (directions shown by arrow Y).

The moving mechanism portion 40 is configured by the lifting mechanism 41 and the horizontal moving mechanism 42. That is to say, the moving mechanism portion 40 is configured to move the dispenser portion 20 and the stage portion 30 in mutually orthogonally intersecting three axial directions (vertical, lateral, and front-back).

The ultraviolet irradiating portion 50 comprises a UV lamp or a UV-LED as a light source. The ultraviolet irradiating portion 50 is configured to uniformly irradiate ultraviolet light onto the ultraviolet curing material M laminated on a work manufacturing region including a central portion of the stage portion 30.

In the present embodiment, every time the ultraviolet curing material M for one layer is discharged onto the stage portion 30, the stage portion 30 is moved such that the work manufacturing region of the stage portion 30 falls within an ultraviolet irradiating region of the ultraviolet irradiating portion 50, and ultraviolet light UV is irradiated on the ultraviolet curing material M on the stage portion 30.

The control device 80 controls the compressed air supplying portion 23, the moving mechanism portion 40, and the ultraviolet irradiating portion 50 based on three-dimensional data of a product to be manufactured.

That is to say, the control device 80 controls the discharge amount of the ultraviolet curing material M from the nozzle 21d, the relative movement amount between the nozzle 21d and the stage portion 30, the irradiation timing, irradiation amount or irradiation time of ultraviolet light UV or the like and also performs driving control of the movement locus (molding path) of the nozzle 21d.

The control device 80 comprises, among others, a processor for performing various calculations, a memory device having a non-transitory memory medium storing therein various pieces of information (programs, data) , and an input-output device for controlling input and output of data inside and outside of the control device 80. The control program for a three-dimensional printer (so-called "slice software") according to the present invention is stored in the control device 80.

The control program for a three-dimensional printer (slice software) according to the present embodiment is configured to suitably set, based on three-dimensional image information or dimensional information of respective parts of a molded object to be manufactured, and further based on time variation information of the viscosity of ultraviolet curing liquid silicone rubber discharged from the nozzle 21d, an intensity and irradiation time of ultraviolet light that is irradiated onto one layer of uncured layer formed of the ultraviolet curing liquid silicone rubber, to set a discharge pressure of the molding material from the nozzle, a timing for forming the next molded layer, and a movement locus (path) of the nozzle 21d that are optimal for manufacturing the desired molded object, and to control the compressed air supplying portion 23, the moving mechanism portion 40, and the ultraviolet irradiating portion 50 based on these parameters.

As a result, the manufacturing method of a molded object W by the three-dimensional printer 10 according to the present embodiment is realized through execution of the control program for a three-dimensional printer according to the present invention by the control device 80.

That is to say, in principle, the liquid silicone rubber according to the present embodiment is a non-Newtonian fluid having properties of not immediately curing but still exhibiting certain viscosity and being slightly deformable also after discharge from the nozzle.

Therefore, the present embodiment utilizes those properties of the liquid silicone rubber, and after discharging the liquid silicone rubber from the nozzle of the three-dimensional printer to form a layer, the layer is not completely cured by controlling ultraviolet irradiation, and the next layer is formed and adhered thereto within a time the layer is viscous, and all layers are finally cured as a whole to manufacture a molded object.

That is to say, in the present embodiment, the control program for a three-dimensional printer installed in the control device 80 is configured in that, by inputting various parameters such as data of a concrete three-dimensional shape of the desired molded object, various dimensional data for specifying a three-dimensional size of the desired molded object, data of the type of molding material, data of time variation of the molding material until curing, and data of time until curing by UV crosslinking through ultraviolet light irradiation, the program starts molding of a next overlying molded layer in a state one molded layer has not cured yet and maintains a certain viscosity, automatically calculates a timing for adhering and solidifying both molded layers, and suitably forms a movement locus ("molding path") of the nozzle to perform driving control of the nozzle in accordance with the molding path to consequently create a desired molded object.

### [Manufacturing Method of a Molded Object with a Three-dimensional Printer]

Next, a manufacturing method of a molded object W using the three-dimensional printer 10 will be explained with reference to Fig. 3, Fig. 4, and Fig. 5.

As shown in Fig. 3, in the present embodiment, the three-dimensional printer 10 is configured to manufacture a molded object W by sequentially repeating, in a laminating direction, an uncured layer forming process (Step S1) and an uncured layer curing process (Step S2) in which the uncured layer is incompletely cured and cured in a state in which it maintains an adhesive state.

As shown in Fig. 4(a), the uncured layer forming process (Step S1) is a process of forming one layer of the molded layer L with a specified uncured ultraviolet curing material M on the stage 30.

In the present embodiment, the uncured layer forming process (Step S1) is a process of forming one layer of the molded layer L with an uncured ultraviolet curing material M in which the uncured ultraviolet curing material M is discharged from the nozzle 21d while moving the nozzle 21d, for instance, in a region of forming one specified layer of a molded layer L of the desired molded object along a desired movement locus (molding path) of the nozzle as if to draw a concentric circle from inside (central portion) towards outside (outer edge portion).

Note that the molding path is generally formed from inside towards outside of the desired molded object as if to draw a concentric circle.

As shown in Fig. 4(b), the uncured layer curing process (Step S2) is a process of curing the discharged ultraviolet curing liquid silicone rubber which is the ultraviolet curing material M in an incomplete state in which it still maintains a specified viscosity by irradiating ultraviolet light UV onto the one layer of the molded layer L while controlling the irradiation time and irradiation intensity of ultraviolet light UV such that the molded layer L does not completely cure. Therefore, in this process, the molded layer L does not completely cure also after ultraviolet irradiation and is in a viscous state.

The control device 80 controls the compressed air supplying portion 23, the moving mechanism portion 40, and the ultraviolet irradiating portion 50 using the mounted slice software according to the present embodiment to execute a curing process S2 in which the one layer of the molded layer L formed in the immediately preceding uncured layer forming process (Step S1) is incompletely cured so that it does not finally cure, and then to execute the next process, the uncured layer forming process S1 for the overlying molded layer L.

That is to say, the slice software mounted in the control device 80 is configured to control the three-dimensional printer to finish the curing process S2 prior to final curing of the one layer of the molded layer L formed in the immediately preceding uncured layer forming process and to execute the uncured layer forming process S1 for forming the next overlying layer of the molded layer L.

As a result, in the uncured layer curing process (Step S2), the outer edge portion L1 of the one layer of the molded layer L formed in the immediately preceding uncured layer forming process (Step S1) and the outer edge portion L2 of the one layer of the molded layer L formed in the next uncured layer forming step (Step S1) will be in a mutually adhering state. Then, the three-dimensional printer 10 performs driving control of the nozzle towards the upper layers while repeating the uncured layer forming process S1 and the curing process S2 in which the uncured layer is incompletely cured in a highly viscous state to manufacture a molded object.

### [Action and Effects]

According to the manufacturing method of the present embodiment, by means of the slice software programmed to execute the manufacturing method of the present embodiment, it is possible to form mutually contacting upper and lower molded layers L on an upper layer, and to adhere the previously formed lower molded layer L1 and the upper molded layer L2 formed next with each other so as to eliminate build lines (unevenness, gaps or the like) at end surface portions of the molded object W and to mold a molded object W of high transparency within a specified time until the ultraviolet curing material M finally cures since ultraviolet light is irradiated while suitably controlling intensity and irradiation time, and the material is incompletely cured in a highly viscous state.

In this case, regarding the final curing of the adhered molded layers L1, L2, irradiation by the ultraviolet irradiating portion 50 is repeatedly performed by the number of layers to be formed so that consequently, curing energy by irradiation is supplied to all layers and all layers are finally cured to manufacture the molded object.

More particularly, since the curing process (Step S2) is finished prior to the final curing of the one layer of the molded layer L formed in the immediately preceding uncured layer forming process (Step S1) and the uncured layer forming process (Step S1) for forming the next layer of the molded layer L is executed, the ultraviolet curing material M forming the one layer of the molded layer L1 and the overlying layer of the molded layer L2 is still viscous as shown in Fig. 5(a) so that "hangings" are formed at outer edge portions Le of the respective molding layers L and the respective outer edge portions Le of the mutually adjoining upper and lower molding layers L adhere.

As a result, in the present embodiment, gaps (causes of build lines) G between the outer edge portions Le of the respective molded layers L will become smaller so that it is possible to restrict degradations in the transparency of the molded object W due to build lines or irregular reflection.

In contrast thereto, in a conventionally performed method in which respective molded layers L are finally cured (completely cured) by the curing step (S2) each time, gaps G between outer edge portions Le of the mutually adjoining upper and lower molded layers L become large as shown in Fig. 5(b) so that the transparency of the molded object was degraded due to build lines or irregular reflection. Therefore, it is possible to eliminate those conventional drawbacks by means of the manufacturing method according to the present embodiment.

Further, with this manufacturing method, it is possible to manufacture a silicone rubber molded object W of high precision comparable to a silicone rubber molded object obtained by metallic molding by using, for instance, ultraviolet curing liquid silicone rubber as the ultraviolet curing material M and by adjusting its viscosity or the like. Further, physical properties of the silicone rubber molded object W manufactured by this manufacturing method are equivalent to physical properties of a silicone rubber molded object obtained by metallic molding especially in terms of tensile strength or stretch.

Further, according to this manufacturing method, it is possible to execute a manufacturing method requiring no support members since the upper and lower molded layers L2, L1 adhere with other.

That is to say, in the case of a state the outer edge portion Le of the upper molded layer L2 is overhanging with respect to the outer edge portion Le of the lower molded layer L1 as shown in Fig. 6, when using a conventional manufacturing method in which ultraviolet irradiation is performed until the lower molded layer L1 completely cures, the outer edge portion Le of the molded layer L1 will have no viscosity so that even if the overlying molded layer L2 is ultraviolet cured, the strength of the outer edge portion Le cannot be maintained and might break. Therefore, it was conventionally necessary to provide support members at portions where such overhangs and undercuts or the like are generated, which made manufacturing operations troublesome.

However, in the manufacturing method according to the present embodiment, since the uncured layer curing process (Step S2) of irradiating ultraviolet light UV onto the lower molded layer L1 is performed such that outer edge portions Le of molded layers L2, L1 that mutually adjoin in vertical directions adhere with each other in uncured states, also under molding conditions in which the outer edge portion Le of the upper molded layer L2 is formed to protrude further outward than the outer edge portion Le of the lower molded layer L1 as shown in Fig. 6, the outer edge portion Le of the upper molded layer L2 will not break since the outer edge portion Le of the lower molding layer L1 is formed to have a specified suitable viscosity and exhibits adhesiveness so that the outer edge portion Le of the upper molded layer L2 is adhered and fixed to the lower molded layer Le. Therefore, in the present embodiment, operations of manufacturing a molded object can be smoothly performed without requiring support members.

It is also possible to manufacture a molded object by utilizing machine learning by means of AI (Artificial Intelligence) to optimize molding conditions based on parameters such as viscosity of the uncured curing material discharged from the nozzle, time variations in the viscosity, intensity and irradiation time of ultraviolet light, or heating time.

That is to say, it is also possible to configure the control program for a three-dimensional printer according to the present embodiment to include a step of acquiring learning data including molding condition data related to time variations in the viscosity of the discharged various uncured molding materials, discharge pressure from the nozzle, heating time, intensity and irradiation time of ultraviolet light, curing speed, execution time of the uncured layer curing process, timing of forming the next molding layer, conditions of embodiment, or movement locus of the nozzle as well as molding result data related to the quality of transparency of the molded object or build lines when molding based on the molding condition data, a step of generating a learned model with optimized molding conditions by means of machine learning using the obtained learning data, and a step of controlling the three-dimensional printer based on the learned model.

In this manner, when utilizing machine learning with regards to controlling various parameters, it is possible to manufacture a molded object W of even higher quality as the number of times of molding a molded object W increases because functions of acquiring, by manufacturing a molded object W for multiple times, numerous learning data (data sets) comprised of molding conditions (time variations in the viscosity of the discharged respective molding materials, curing speed, time for executing the uncured layer curing processes, intensity of ultraviolet light or the like) and molding results (quality of transparency of a molded object or the like), of generating a learned model with optimized molding conditions through machine learning utilizing the acquired learning data, and of controlling the three-dimensional printer 10 based on the learned model are mounted to the control program for a three-dimensional printer.

### [Alternative Embodiment]

The present invention is not limited to the above embodiment. For instance, while in the above embodiment, the dispenser portion 20 is defined to have the material cartridge 21 accommodating the ultraviolet curing material M, and the compressed air supplying portion 23 for injecting the ultraviolet curing material M from the material cartridge 21, the present invention is not limited to this configuration, and it is also possible to employ a dispenser portion 20 configured to blend, for instance, two types of liquid silicone rubbers and to extrude them by means of an extruder. Moreover, while the moving mechanism portion 40 comprises the lifting mechanism 41 for moving the dispenser portion 20 up and down with respect to the stage portion 30, and the horizontal moving mechanism 42 for moving the stage portion 30 in horizontal directions with respect to the dispenser portion 20 in the above embodiment, it is also possible to omit the lifting mechanism 41 and to employ, instead of the horizontal moving mechanism 42, a moving mechanism that moves the stage portion 30 in three axial directions (up and down, right and left, and front and back) with respect to the dispenser portion 20.

Further, while the ultraviolet irradiating portion 50 is fixed at the printer body 60 in the above embodiment, the ultraviolet irradiating portion 50 may also be fixed at the dispenser portion 20. Further, while a manufacturing method of a molded object using the liquid additive manufacturing method by utilizing an ultraviolet curing material as the molding material has been explained in the above embodiment, the present invention is also applicable to a manufacturing method of a molded object using the liquid additive manufacturing method by utilizing a thermosetting material (for instance, thermosetting liquid silicone rubber) or the like as the molding material.

Moreover, by using the slice software according to the control program for a three-dimensional printer according to the present invention, the present invention is also applicable to a case in which a molded object is manufactured by utilizing a molding material such as RTV (Room Temperature Vulcanizing) silicone rubber where control of the molding time is extremely crucial. RTV (Room Temperature Vulcanizing) silicone rubber is a molding material that cures at room temperature, and it will be necessary to more precisely control various parameters such as molding path for molding, molding order, molding time, or discharge pressure for the molding material from the nozzle when compared to using an ultraviolet curing material or the like. Molding of a molded object with such an RTV silicone rubber is possible only with the manufacturing method and the slice software comprising the control program for a three-dimensional printer according to the present invention.

There are one-pack type and two-pack type RTV silicone rubbers. When the one-pack type is extruded from a container such as a cartridge, it reacts with the moisture in air or the like so that curing starts at room temperature. In the case of the two-pack type, a main agent is mixed with a curing agent, and curing starts either at room temperature or upon heating.

When utilizing such an RTV silicone rubber and executing molding of a molded object while reducing "build lines" and requiring no support members, it is possible to perform molding without any problems immediately after starting the molding since the RTV silicone rubber within a syringe-like material container (in the case of two-pack type) or the RTV silicone rubber at the nozzle tip (in the case of one-pack type) is highly fluid since curing has not yet started.

On the other hand, in coming closer to the final stage of molding, the RTV silicone rubber within the material container (in the case of two-pack type) or the RTV silicone rubber at a nozzle tip (in the case of one-pack type) will start to cure during molding so that the fluidity becomes low and the discharge opening of the nozzle tip may be clogged.

Therefore, by using the manufacturing method and the slice software comprising the control program for a three-dimensional printer according to the present invention to cope with such a situation, it is possible to suitably control the discharge pressure and the molding path to manufacture a molded object using a three-dimensional printer.

In a method of manufacturing a molded object using the liquid additive manufacturing method by utilizing a thermosetting material as the molding material, the three-dimensional printer 10 and the manufacturing method of a molding object using the three-dimensional printer 10 are replaced with those having the following configurations.

The three-dimensional printer 10 will have a dispenser portion 20 for injecting a thermosetting material M, a stage portion 30 onto which the thermosetting material M injected from the dispenser portion 20 is laminated, a moving mechanism portion 40 for moving the dispenser portion 20 and the stage portion 30 relative to each other, and a heating portion 50 using a halogen lamp or the like for heating the thermosetting material M injected onto the stage 30, a printer body 60, and a control device 80.

The uncured layer forming process (Step S1) is a process of forming one layer of a molded layer L with an uncured thermosetting material M. More particularly, the uncured layer forming process (Step S1) is a process of forming one layer of the molded layer L with the uncured thermosetting material M by discharging the uncured thermosetting material M from a nozzle 21d while moving the nozzle 21d from inside of a region of forming one layer of the molded layer L towards an outer edge portion.

The curing process (Step S2) is a process of incompletely curing one layer of the molded layer L by heating it to be in a highly viscous state. The control device 80 is mounted with slice software programmed to control respective portions of the three-dimensional printer 10 such that the uncured layer curing process (Step S2) is finished prior to the final curing of the one layer of the molded layer L formed in the immediately preceding uncured layer forming step (Step S1) and to execute the uncured layer forming process (Step S1) for forming the next one layer of the molded layer L.

As a result, in the uncured layer curing process (Step S2), an outer edge portion Le of the one layer of the molded layer L formed in the immediately preceding uncured layer forming process (Step S1) and an outer edge portion Le of the one layer of the molded layer L formed in the next uncured layer forming process (Step S1) will be in an adhering state while both are in an uncured state, and a molded object is manufactured with such a mutually adhering state of the vertically adjoining molded layers L continuing.

The components of the above embodiment are not limited to the above descriptions within the scope of the gist of the present invention.

### [Industrial Applicability]

Since the present invention relates to a manufacturing method of a molded object using a three-dimensional printer and a control program for a three-dimensional printer, it has wide industrial applicability.

### [Reference Sign List]

10 Three-dimensional printer
20 Dispenser portion
21d Nozzle
30 Stage portion
40 Moving mechanism portion
50 Ultraviolet irradiating portion
80 Control device
M Ultraviolet curing material (molding material)
S1 Uncured layer forming process
S2 Uncured layer curing process
UV Ultraviolet light
W Molded object

## Claims

1. A manufacturing method of a molded object using a three-dimensional printer that sequentially repeats, in a laminating direction, an uncured layer forming process of discharging and laminating uncured molding material from a nozzle to form one layer of a molded layer with the uncured molding material, and an uncured layer curing process of curing the one layer of the molded layer to mold a molded object, wherein,
the manufacturing method of a molded object using a three-dimensional printer finishes the uncured layer curing process prior to the curing of the one layer of the molded layer formed by the immediately preceding uncured layer forming process, executes the uncured layer forming process of forming the next one layer of the molded layer, and adheres and cures the one layer of the molded layer in a viscous state with the next one layer of the molded layer in a viscous state to form a molded object.

2. The manufacturing method of a molded object using a three-dimensional printer according to Claim 1, wherein,
the uncured layer forming process is a process of forming one layer of the molded layer with the uncured molding material by discharging the uncured molding material from the nozzle while moving the nozzle from inside of a region of forming one layer of the molded layer towards an outer edge portion, and
the uncured layer curing process adheres and cures a viscous outer edge portion of the one layer of the molded layer formed in the immediately preceding uncured layer forming process and an outer edge portion of one layer of the molded layer formed in the next uncured layer forming process.

3. The manufacturing method of a molded object using a three-dimensional printer according to Claim 1 or 2, wherein,
the uncured molding material is an ultraviolet curing liquid silicone rubber,
and the uncured layer curing process is a process of irradiating ultraviolet light onto the ultraviolet curing liquid silicone rubber which is the uncured molding material while controlling time variations in the viscosity of the ultraviolet curing liquid silicone rubber, intensity and
irradiation time of ultraviolet light, discharge pressure of the molding material from the nozzle, timing of forming the next molding layer, or movement locus of the nozzle.

4. The manufacturing method of a molded object using a three-dimensional printer according to Claim 1 or 2, wherein,
the uncured molding material is a thermosetting liquid silicone rubber, and
the uncured layer curing process is a process of heating the thermosetting liquid silicone rubber which is the uncured molding material while controlling time variations in the viscosity of the thermosetting liquid silicone rubber, heating time, discharge pressure of the molding material from the nozzle, timing of forming the next molding layer, or movement locus of the nozzle.

5. The manufacturing method of a molded object using a three-dimensional printer according to Claim 4, wherein,
the thermosetting liquid silicone rubber is an RTV (Room Temperature Vulcanizing) silicone rubber.

6. The manufacturing method of a molded object using a three-dimensional printer according to Claim 1 or 2, wherein,
the uncured molding material is a thermoplastic resin, and
the uncured layer curing process is a process of heating the thermoplastic resin which is the uncured molding material while controlling time variations in the viscosity of the thermoplastic resin, heating time, discharge pressure of the molding material from the nozzle, timing of forming the next molding layer, or movement locus of the nozzle.

7. The manufacturing method of a molded object using a three-dimensional printer according to Claim 1 or 2, wherein,
the three-dimensional printer is a three-dimensional printer of MEX method (Material Extrusion Deposition Method).

8. The manufacturing method of a molded object using a three-dimensional printer according to Claim 1 or 2, wherein,
the three-dimensional printer is a three-dimensional printer of LAM method (Liquid Additive Manufacturing Method).

9. A program for executing operations of a control device of a three-dimensional printer for manufacturing a molded object by sequentially repeating an uncured layer forming process of discharging and laminating uncured molding material from a nozzle to form one layer of a molded layer with the uncured molding material, and an uncured layer curing process of curing the one layer of the molded layer, wherein,
the control program for a three-dimensional printer controls the three-dimensional printer to finish the uncured layer curing process prior to the final curing of the one layer of the molded layer formed by the immediately preceding uncured layer forming process, and to execute the uncured layer forming process of forming the next one layer of the molded layer.

10. The control program for a three-dimensional printer according to Claim 9, wherein,
the uncured molding material is an ultraviolet curing liquid silicone rubber, and
the uncured layer curing process is a process of irradiating ultraviolet light onto the ultraviolet curing liquid silicone rubber which is the uncured molding material based on parameters including time variations in the viscosity of the ultraviolet curing liquid silicone rubber, intensity and irradiation time of ultraviolet light, discharge pressure of the molding material from the nozzle, timing of forming the next molding layer, or movement locus of the nozzle.

11. The control program for a three-dimensional printer according to Claim 9, wherein,
the uncured molding material is a thermosetting liquid silicone rubber, and
the uncured layer curing process is a process of heating the thermosetting liquid silicone rubber which is the uncured molding material based on parameters including time variations in the viscosity of the thermosetting liquid silicone rubber, heating time, discharge pressure of the molding material from the nozzle, timing of forming the next molding layer, or movement locus of the nozzle.

12. The control program for a three-dimensional printer according to Claim 9, wherein,
the uncured molding material is a thermoplastic resin, and
the uncured layer curing process is a process of heating the thermoplastic resin which is the uncured molding material based on parameters including time variations in the viscosity of the thermoplastic resin, heating time, discharge pressure of the molding material from the nozzle, or timing of forming the next molding layer, or movement locus of the nozzle.

13. The control program for a three-dimensional printer according to Claim 9, wherein,
including a step of acquiring learning data including molding condition data related to time variations in the viscosity of the discharged various uncured molding materials, discharge pressure from the nozzle, heating time, intensity and irradiation time of ultraviolet light, curing speed, execution time of the uncured layer curing process, timing of forming the next molding layer, conditions of embodiment, or movement locus of the nozzle as well as molding result data related to the quality of transparency of the molded object or build lines when performing molding based on the molding condition data,
a step of generating a learned model with optimized molding conditions by means of machine learning using the obtained learning data, and
a step of controlling the three-dimensional printer based on the learned model.
